Europäisches Patentamt

European Patent Office

Office européen des brevets

(19)

(11) Veröffentlichungsnummer: **0 248 181**
**B1**

(12) # EUROPÄISCHE PATENTSCHRIFT

(45) Veröffentlichungstag der Patentschrift:
27.06.90

(51) Int. Cl.⁵: **B60R 16/02, H02G 3/08**

(21) Anmeldenummer: 87105694.1

(22) Anmeldetag: 16.04.87

(54) Sicherungs- und Verteilerkasten für Kraftfahrzeuge.

(30) Priorität: 06.06.86 DE 3619183

(43) Veröffentlichungstag der Anmeldung:
09.12.87 Patentblatt 87/50

(45) Bekanntmachung des Hinweises auf die Patenterteilung:
27.06.90 Patentblatt 90/26

(84) Benannte Vertragsstaaten:
DE FR GB IT

(56) Entgegenhaltungen:
EP-A- 0 041 583
DE-A- 2 606 319
DE-A- 2 748 872
DE-A- 2 827 106
DE-A- 3 032 249
DE-U- 7 424 619
US-A- 1 424 691
US-A- 4 047 787

(73) Patentinhaber: AUDI AG,
Auto-Union-Strasse 1 Postfach 220,
D-8070 Ingolstadt(DE)

(72) Erfinder: Ledendecker, Ingo, Dipl.-Ing., Frankenring 47,
D-8079 Buxheim(DE)
Erfinder: Kastner, Michael, Dipl.-Ing., Südliche
Ringstrasse 23, D-8070 Ingolstadt(DE)
Erfinder: Rion, Claude, Hagauer Strasse 31,
D-8070 Ingolstadt(DE)
Erfinder: Cervera, Carlos, Dipl.-Ing., Lindenstrasse 8,
D-8071 Eitensheim(DE)

(74) Vertreter: Le Vrang, Klaus, AUDI AG
Postfach 220 Patentabteilung I/EQP,
D-8070 Ingolstadt(DE)

**Beschreibung**

Die Erfindung bezieht sich auf einen Sicherungs- und Verteilerkasten für Kraftfahrzeuge gemäß Oberbegriff des Patentanspruches 1.

Der Sicherungs- und Verteilerkasten dient in erster Linie der Aufnahme der gesamten Zentralelektrik des Kraftfahrzeuges und ist häufig in einem im Motorraum sich befindenden und an den Fahrgastraum grenzenden sogenannten Wasserkasten untergebracht. Damit soll unter anderem erreicht werden, daß die Zentralelektrik des nach außen hin wasserdichten Sicherungs- und Verteilerkastens vor Verschmutzung und ähnlichen, die Funktion der integrierten elektrischen Bauelemente beeinträchtigenden Einflüssen geschützt ist. Sowohl vom Fahrgastraum als auch vom Motorraum münden diverse Leitungssätze in den Sicherungs- und Verteilerkasten, von wo aus die Ansteuerung der einzelnen Funktionselemente vorgenommen wird. Während die Zuführung der Leitungen vom Fahrgastraum keine wesentlichen Probleme bietet, ist es bei den vom Motorraum einmündenden Leitungssätzen unbedingt erforderlich, entsprechende Maßnahmen zu ergreifen, damit an den Durchtrittsstellen der Leitungen durch den Wasserkasten nicht auch noch Schmutz, Motorgase oder ähnliches eindringen kann. Dies deshalb, da ja im Wasserkasten meist auch die Heiz- und Belüftungseinrichtung für den Fahrgastraum installiert ist.

Nach dem heutigen Stand der Technik werden die Leitungssätze mit den entsprechenden Steckern über oft recht kleine Bohrungen durch die Stirnwand in den Innenraum und von dort in den Wasserkasten hineingeführt und dann an den Sicherungs- und Verteilerkasten angeschlossen. Nachteilig ist dabei weiterhin, daß die betreffenden Leitungsdurchtritte durch geeignete Maßnahmen abgedichtet werden müssen. Werden bei einer nachträglich sich ergebenden Ergänzung des Ausstattungsumfanges in der Fahrzeugelektrik weitere Kabelanschlüsse vonnöten, so ist es meist nicht ohne weiters möglich, diese Leitungssätze durch die bereits vorhandenen Bohrungen in der Stirnwand zu führen, so daß weitere Kabeldurchlässe geschaffen werden müssen.

Die vorliegende Erfindung soll diesem Mißstand abhelfen.

Daher liegt der Erfindung die Aufgabe zugrunde, einen Sicherungs-und Verteilerkasten für Kraftfahrzeuge derart zu gestalten, daß der Anschluß insbesondere der vom Motorraum einmündenden Leitungssätze auf einfache Weise und ohne Dichtungsprobleme durchführbar ist und daß weiterhin mehr Flexibilität dahingehend erreicht werden kann, daß auch zusätzliche, d. h. zuvor nicht vorgesehene Leitungssätze ohne Schwierigkeiten anschließbar sind.

Diese Aufgabe wird erfindungsgemäß mit einem Sicherungs- und Verteilerkasten gelöst, der gemäß den Merkmalen des Patentanspruches 1 gestaltet ist.

Der aus einer Ausnehmung des Wasserkastens herausragende Vorbau des Sicherungs- und Verteilerkastens ist aufgrund seiner festgelegten äußeren Konturen auf sehr einfache Weise gegenüber dem Motorraum abdichtbar. Durch die oben offenen Ausnehmungen im Unterteil des Sicherungs- und Verteilerkastens können sowohl mit Leitungen versehene Tüllen, als auch Blindstopfen eingesetzt werden, so daß bei nachträglich sich erhöhendem Ausstattungsumfang die eingesetzten Blindstopfen durch normale Kabeldurchlässe ersetzt werden können. Die Anordnung als solche zeigt sich ausgesprochen montage- und wartungsfreundlich, da nunmehr ein Durchfädeln von Leitungssätzen und Steckern durch zugehörige Bohrungen entfallen kann. Die erfindungsgemäße Vorgehensweise erleichtert nun auch die Modulbauweise des Kraftfahrzeuges im Bereich des Vorderwagens. Eine zentrale Zusammenführung der gesamten Elektrik ist möglich. Durch den Vorbau ist ein zusätzlicher Raumgewinn für die Zentralelektrik geschaffen. Weitere Vorteile ergeben sich aus der nachstehenden Figurenbeschreibung, die eine vorteilhafte Ausführungsform beschreibt. Die zugehörige Zeichnung zeigt dabei im einzelnen in

Fig. 1 eine schematische Darstellung eines Kraftfahrzeuges mit einem im Wasserkasten angeordneten Sicherungs- und Verteilerkasten,

Fig. 2 eine teilgeschnittene perspektivische Darstellung eines erfindungsgemäß ausgestalteten Sicherungs-und Verteilerkastens,

Fig. 3 eine Ansicht gemäß Pfeil III in Fig. 2 bei abgenommenem Deckel,

Fig. 4 eine Draufsicht auf die Darstellung gemäß Fig. 3 und

Fig. 5 eine weitere Ansicht der Darstellung gemäß Fig. 3.

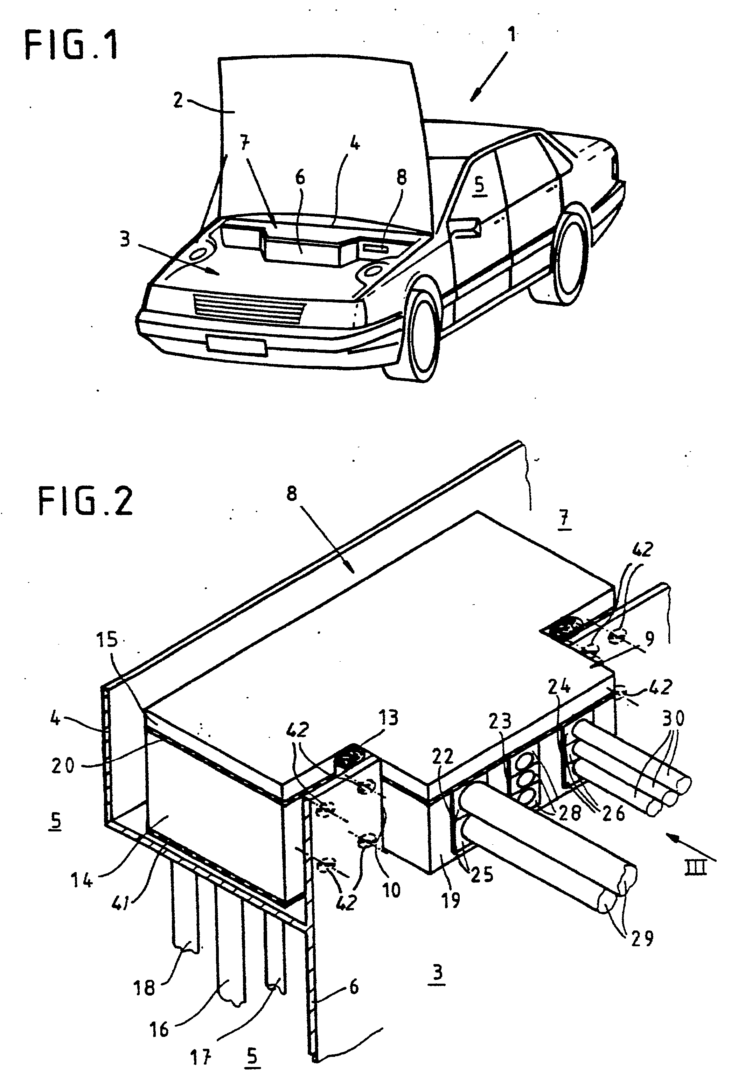

Fig. 1 zeigt ein Personenkraftfahrzeug (1) mit hochgeklappter Motorhaube (2), so daß ein Motorraum (3) sichtbar wird. Dieser ist seitlich und nach vorne durch die Karosserie-Begrenzungswände abgeschlossen, während eine weitere Trennwand (4) die Abgrenzung zum Fahrgastraum (5) herstellt. Durch eine der Trennwand (4) vorgelagerte, in etwa über die Breite des Motorraumes (3) reichende weitere Trennwand (6) wird ein abgeschlossener Bereich, ein sogenannter "Wasserkasten" (7) gebildet. Dieser ist insbesondere gegenüber dem Motorraum (3) in der Weise abgedichtet, daß von dort Motorgase oder ähnliche Verschmutzungen nicht eindringen können. Der Wasserkasten (7) eignet sich durch seine zentrale Lage in besonderer Weise zum Unterbringen eines Sicherungs- und Verteilerkastens (8), in den diverse Leitungen beispielsweise von Verbrauchern aus dem Motorraum (3) und von diversen Bedienungs- und Anzeigeninstrumenten des Fahrgastraumes (5) münden.

Wie aus der Darstellung nach Fig. 2 zu entnehmen ist, ist der Sicherungs- und Verteilerkasten (8) im wesentlichen als etwa quaderförmiger Kasten ausgebildet, der einen Vorbau (9) aufweist. Dieser Vorbau (9) ragt aus einem maßlich angepaßten Ausschnitt (10) der vorderen Trennwand (6) heraus und damit in den Motorraum (3) hinein. Eine im Bereich des Ausschnittes (10) vorgesehene, umlaufende Dichtleiste (13) verhindert das Eindringen von Gasen und Verschmutzungen aus dem Motorraum in den Wasserkasten (7) über diesen Ausschnitt (10). Der Sicherungs- und Verteilerkasten (8) ist insgesamt zweigeteilt ausgebildet, bestehend aus dem eigentlichen Gehäuse (14) und einem aufgesetzten Deckel (15). Auch hier ist zwischen beiden eine umlaufende Dichtleiste (20) vorgesehen.

Vom Fahrgastraum (5) kommende und in den Sicherungs- und Verteilerkasten (8) einmündende Kabelstränge (16-18) können, wie angedeutet, von unten in den Wasserkasten (7) einmünden. Sie dienen der Versorgung von im Fahrgastraum (5) vorgesehenen Bedienungsund Anzeigeninstrumenten, wie beispielsweise Beleuchtung, elektrischer Fensterheber, Heizung usw. Diese Kabelstränge (16 bis 18) können durch eine entsprechende Öffnung in die Zentralelektrik der Sicherungs- und Verteilerkastens (8) geführt werden.

Ein weiteres umlaufendes Dichtungsband (41) verhindert auch in diesem Bereich das Eindringen von Verschmutzungen.

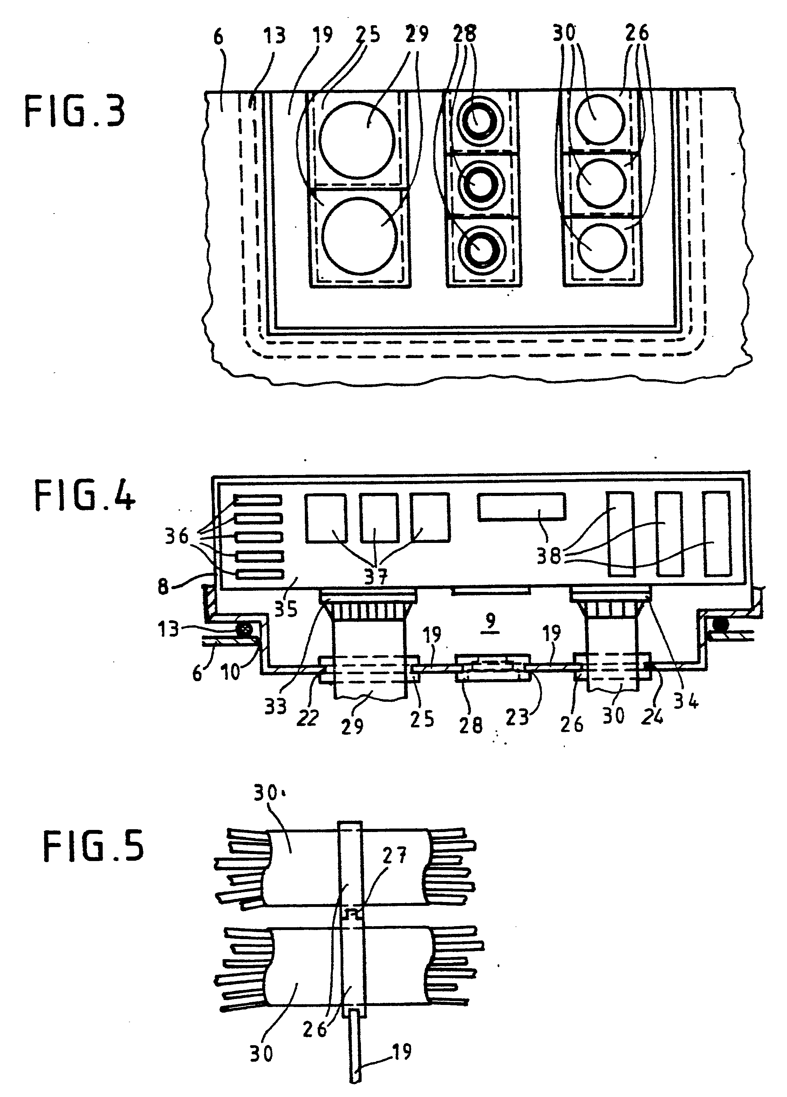

Die vordere, in den Motorraum (3) hineinragende Stirnfläche (19) des Gehäuses (14) weist, wie dies insbesondere aus den weiteren Fig. 3 bis 5 hervorgeht, eine Anzahl von Aussparungen (22-24) auf. In jede Aussparung (22-24) ist eine Anzahl von Kabeltüllen (25, 26) von oben bei abgenommenen Deckel (15) eingesetzt, wobei sie jeweils die vorgenannten Aussparungen (22-24) beidseitig umgreifen und untereinander in der Art einer Nut- und Federverbindung (27) aufeinandergesteckt sind. Damit ist eine optimale Dichtwirkung erzielbar.

Durch die äußeren Kabeltüllen (25, 26) sind nun von im Motorraum (3) angeordneten Verbrauchern kommende Kabelstränge (29, 30) in den Sicherungs- und Verteilerkasten (8) geführt. Durch die mittlere Aussparung (23) können Kabel für elektrische Zusatzausstattungen geführt werden. Sind keine Leitungen vorgesehen, so sind die Kabeltüllen als Blindstopfen (28) ausgelegt. Falls eine Nachrüstung erforderlich sein sollte, können sie jederzeit gegen andere ausgetauscht werden, so daß die Nachrüstarbeiten auf besonders einfache Weise durchführbar sind.

Wie aus Fig. 4 weiter hervorgeht, münden die Kabelstränge (29, 30) als Steckerverbindungen (33, 34) in ein herausnehmbares Innenteil (35) des Sicherungs- und Verteilerkastens (8). Auf einer Leiterplatte sind dabei eine Anzahl von Sicherungen (36) und Relais (37, 38) untergebracht.

Es könnten selbstverständlich auch die beispielsweise vom Fahrgastraum (5) kommenden und in den Sicherungs- und Verteilerkasten (8) mündenden Kabelstränge (16-18) durch die im Vorbau (9) eingesetzten Kabeltüllen (25, 26) in den Motorraum (3) geführt werden oder mit Leitungen, die vom Motorraum in die Zentralelektrik münden, gekoppelt werden.

Der gesamte Sicherungs- und Verteilerkasten (8) ist somit ausgesprochen flexibel gestaltet im Hinblick auf vorzusehende Zusatzausstattungen, wobei außerdem günstige Verhältnisse hinsichtlich Montage- und Wartungsarbeiten gegeben sind. Das Zusammenfassen der gesamten Zentralelektrik ist damit auf ebenfalls besonders einfache Weise durchführbar. Darüber hinaus ist ein optimaler Schutz der integrierten Bauteile (36 bis 38) gewährleistet.

In Weiterbildung der in Fig. 2 gezeigten Ausführung wäre denkbar, den dann als tragendes Teil ausgebildeten Sicherungs- und Verteilerkasten (8) dafür einzusetzen, die Steifigkeit der in etwa über die Breite des Motorraumes (3) reichenden Trennwand (6) zu erhöhen. Zu diesem Zweck könnte, wie ebenfalls in Fig. 2 mittels gestrichelter Linien angedeutet, über Schraubverbindungen (42) oder ähnlich wirkende Verbindungstechniken eine festigkeitsmäßige Kopplung beider Bauteile (6, 8) herbeigeführt werden. Der Sicherungs- und Verteilerkasten (8) würde dadurch mit seiner vorderen Stirnfläche satt an der Trennwand (6) anliegen. Die Dichtung (13) könnte dadurch ggf. entfallen.

**Patentansprüche**

1. Sicherungs- und Verteilerkasten (8) für Kraftfahrzeuge (1) mit in diesen einmündenden Versorgungsleitungen für elektrische Verbraucher und Steuerleitungen der Fahrzeugelektrik, wobei der Sicherungs- und Verteilerkasten (8) in einem innerhalb eines Motorraumes (3) des Kraftfahrzeuges sich befindenden und von diesem durch eine Trennwand (6) abgegrenzten Wasserkasten (7) angeordnet ist, dadurch gekennzeichnet, daß der Sicherungs- und Verteilerkasten (8) einen Vorbau (9) aufweist, der aus einer den Abmaßen des Vorbaues (9) angepaßten Ausnehmung (10) der Trennwand (6) des Wasserkastens (7) herausragt und damit in den Motorraum (3) gerichtet ist, daß weiterhin eine Stirnfläche (19) des Vorbaues (9) eine Anzahl von Aussparungen (22 bis 24) zum Durchführen von Kabelsträngen (16 - 18, 29, 30) aufweist.

2. Sicherungs- und Verteilerkasten nach Patentanspruch 1, dadurch gekennzeichnet, daß in die Aussparungen (22 bis 24) jeweils eine Anzahl von Kabeltüllen (25, 26) zur Aufnahme der Kabelstränge (16 - 18, 29, 30) eingesetzt ist.

3. Sicherungs- und Verteilerkasten nach Patentanspruch 2, dadurch gekennzeichnet, daß eine Anzahl der eingesetzten Kabeltüllen als Blindstopfen (28) ausgeführt ist.

4. Sicherungs- und Verteilerkasten nach einem oder mehreren der Patentansprüche 1 bis 3, dadurch gekennzeichnet, daß die Kabeltüllen (25, 26) und/oder die Blindstopfen (28) in die nach oben hin offenen Aussparungen (22 bis 24) einsetzbar sind, wobei sie die Aussparungen (22 bis 24) beidseitig umgreifen und untereinander in der Art einer Nut- und Federverbindung (27) verbunden sind.

5. Sicherungs- und Verteilerkasten nach Patentanspruch 1, dadurch gekennzeichnet, daß im Bereich des für den Durchtritt des Vorbaues (9) vorgesehenen Ausschnittes (10) eine umlaufende Dichtleiste (13) zwischen vorderer Trennwand (6) und dem Sicherungs- und Verteilerkasten (8) angeordnet ist.

6. Sicherungs- und Verteilerkasten nach Patentanspruch 1, dadurch gekennzeichnet, daß dieser insgesamt zweigeteilt ausgebildet ist, bestehend aus einem Gehäuse (14) und einem aufgesetzten Deckel (15), zwischen denen eine umlaufende Dichtleiste (20) vorgesehen ist, daß die Kabelstränge (29, 30) als Steckerverbindungen (33, 34) in ein herausnehmbares Innenteil (35) des Sicherungs- und Verteilerkastens (8) münden, wo auf einer Leiterplatte eine Anzahl von Sicherungen (36) und Relais (37, 38) angeordnet sind.

7. Sicherungs- und Verteilerkasten nach Patentanspruch 2, dadurch gekennzeichnet, daß vom Fahrgastraum (5) kommende und in dem Sicherungs- und Verteilerkasten (8) mündende Kabelstränge (16 bis 18) durch die im Vorbau (9) eingesetzten Kabeltüllen (25, 26) in den Motorraum (3) führbar sind.

8. Sicherungs- und Verteilerkasten nach Patentanspruch 1, dadurch gekennzeichnet, daß zur Steifigkeitserhöhung der Trennwand (6) diese über Schraubverbindungen (42) oder entsprechend wirkende Verbindungstechniken fest mit dem Sicherungs- und Verteilerkasten (8) verbunden ist.

## Claims

1. Protection and distribution box (8) for motor vehicles (1) with supply lines for electrical consumers and control lines for the vehicle electrical system leading into it, the protection and distribution box (8) being positioned in a water box (7) located within an engine compartment (3) of the motor vehicle and separated from it by a dividing wall (6), characterized in that the protection and distribution box (8) has a projection (9) which projects from an opening (10), suited to the dimensions of the projection (9), in the dividing wall (6) of the water box (7) and is thus directed into the engine compartment (3), and also in that a front surface (19) of the projection (9) has a number of recesses (22 to 24) for the passage of cable looms (16–18, 29, 30).

2. Protection and distribution box according to claim 1, characterized in that in each of the recesses (22 to 24) are inserted a number of cable grommets (25, 26) for holding the cable looms (16–18, 29, 30).

3. Protection and distribution box according to claim 2, characterized in that a number of the inserted cable grommets are designed as blanking plugs (28).

4. Protection and distribution box according to one or more of claims 1 to 3, characterized in that the cable grommets (25, 26) and/or the blanking plugs (28) can be inserted in the recesses (22 to 24) which are open at the top, and they grip the recesses (22 to 24) on both sides and are joined to one another in the manner of a tongue-and-groove joint (27).

5. Protection and distribution box according to claim 1, characterized in that an enclosing sealing strip (13) is positioned between the front dividing wall (6) and the protection and distribution box (8) in the region of the cut-out (10) provided for the passage of the projection (9).

6. Protection and distribution box according to claim 1, characterized in that altogether this is formed as two parts consisting of a housing (14) and a superimposed cover (15) between which is provided an enclosing sealing strip (20), and in that the cable looms (29, 30) lead into a removable inner part (35) of the protection and distribution box (8) as plug-in connectors (33, 34) where a number of fuses (36) and relays (37, 38) are positioned on a printed board.

7. Protection and distribution box according to claim 2, characterized in that the cable looms (16 to 18) coming from the passenger compartment (5) and leading into the protection and distribution box (8) can be led into the engine compartment (3) through the cable grommets (25, 26) inserted in the projection (9).

8. Protection and distribution box according to claim 1, characterized in that to increase the stiffness of the dividing wall (6) this is connected rigidly to the protection and distribution box (8) by screwed connections (42) or appropriately acting connecting technology.

## Revendications

1. Boîte a fusibles et de distribution (8) pour véhicules automobiles (1), dans laquelle aboutissent des lignes d'alimentation pour des récepteurs électriques et des lignes de commande pour l'appareillage électrique du véhicule, cette boîte à fusibles et de distribution (8) étant disposée dans une boîte à eau (7) qui se trouve à l'intérieur du compartiment de moteur (3) du véhicule automobile et qui est delimitée par rapport à celui-ci par une cloison (6), caractérisée en ce que la boîte à fusibles et de distribution (8) présente un avant-corps (9), qui fait saillie à travers une encoche (10) pratiquée dans la cloison (6) de la boîte à eau (7) et adaptée aux dimensions de cet avant-corps (9), et qui s'étend ainsi dans le compartiment de moteur (3), et en ce qu'en outre une surface frontale (19) de l'avant-corps (9) présente plusieurs évidements (22 à 24) pour le passage de faisceaux de câbles (16–18, 29, 30).

2. Boîte à fusibles et de distribution selon la revendication 1, caractérisée en ce que plusieurs passe-fils en caoutchouc (25, 26) sont insérés dans chacun des évidements (22 à 24) pour recevoir les faisceaux de câbles (16–18, 29, 30).

3. Boîte à fusibles et de distribution selon la revendication 2, caractérisée en ce que certains des passe-fils insérés sont réalisés sous forme de bouchons d'obturation (28).

4. Boîte à fusibles et de distribution selon l'une quelconque des revendications 1 à 3, caractérisée en ce que les passe-fils en caoutchouc (25, 26) et/ou les bouchons d'obturation (28) peuvent être insérés dans les évidements (22 à 24), qui sont ouverts vers le haut, de façon à chevaucher des deux côtés les bords des évidements (22 à 24) et à s'unir entre eux à la manière d'un assemblage par rainure et languette (27).

5. Boîte à fusibles et de distribution selon la revendication 1, caractérisée en ce que dans la région de l'encoche (10) prévue pour le passage de l'avant-corps (9), une baguette d'étanchéité (13) est disposée tout autour entre la cloison antérieure (6) et la boîte à fusibles et de distribution (8).

6. Boîte à fusibles et de distribution selon la revendication 1, caractérisée en ce qu'elle est réalisée dans l'ensemble en deux parties, se composant d'un boîtier (14) et d'un couvercle rapporté (15) entre lesquels une baguette d'étanchéité (20) est prévue tout autour, et en ce que les faisceaux de câbles (29, 30) aboutissent, sous forme de connecteurs enfichables (33, 34), dans une partie intérieure détachable (35) de la boîte à fusibles et de distribution (8), où plusieurs fusibles (36) et relais (37, 38) sont disposés sur une carte de circuits imprimés.

7. Boîte à fusibles et de distribution selon la revendication 2, caractérisée en ce que des faisceaux de câble (16 à 18) qui proviennent du compartiment des passagers et aboutissent dans la boîte à fusibles et de distribution (8) peuvent passer dans le compartiment de moteur (3) à travers les passe-fils en caoutchouc (25, 26) insérés dans l'avant-corps (9).

8. Boîte à fusibles et de distribution selon la revendication 1, caractérisée en ce que pour accroître la rigidité de la cloison (6), celle-ci est fixée solidement à la boîte à fusibles et de distribution (8) au moyen d'assemblages à vis (42) ou d'autres techniques d'assemblage comparables.

FIG.1

FIG.2

FIG.3

FIG.4

FIG.5